# EUROPÄISCHE PATENTSCHRIFT

(11) **EP 4 028 214 B1**
(45) Veröffentlichungstag und Bekanntmachung des Hinweises auf die Patenterteilung: **25.11.2026**
(21) Anmeldenummer: 20757244.7
(22) Anmeldetag: 10.08.2020
(51) Int. Cl.: B23Q 7/10, B23Q 7/14, B65G 1/04

(54) **ZELLE SOWIE VERFAHREN ZUM BETREIBEN EINER ZELLE AUS MINDESTENS ZWEI VERKETTETEN HORIZONTAL-BEARBEITUNGSZENTREN**
CELL AND METHOD FOR OPERATING A CELL COMPOSED OF AT LEAST TWO INTERLINKED HORIZONTAL-PROCESSING CENTRES
CELLULE ET PROCÉDÉ DE FONCTIONNEMENT D'UNE CELLULE COMPOSÉE D'AU MOINS DEUX CENTRES DE TRAITEMENT HORIZONTAUX RELIÉS ENTRE EUX

(30) Priorität: 11.09.2019 DE 102019213872
(43) Veröffentlichungstag der Anmeldung: 20.07.2022
(73) Patentinhaber: Bavius Technologie GmbH, 88255 Baienfurt (DE)
(72) Erfinder: ZELL, Werner, 88436 Eberhardzell (DE)
(74) Vertreter: Grünecker Patent- und Rechtsanwälte PartG mbB
(86) Internationale Anmeldenummer: PCT/EP2020/072339
(87) Internationale Veröffentlichungsnummer: WO 2021/047838

(56) Entgegenhaltungen:
- EP-A1- 3 272 681
- DE-A1- 102009 040 811
- DE-A1- 102017 217 878
- FR-A1- 2 779 133
- JP-A- S61 297 066
- US-A1- 2018 312 349

## Beschreibung

Die Erfindung betrifft eine Zelle gemäß Patentanspruch 1 1 sowie ein Verfahren zum Betreiben einer Zelle gemäß Patentanspruch 9.

Bearbeitungszentren mit horizontaler Z-Achse (z.B. 5-Achsen-Bearbeitungszentren) arbeiten mit sehr großen Paletten von beispielsweise bis zu 20 m Länge und 4 m Breite. Jede Palette wird in waagrechter Position z. B. auf einer Auflage (Rüstposition) gerüstet (mit Rohteilen bestückt) und nach der Bearbeitung des oder der Werkstücke abgerüstet. Bei der Bearbeitung ist eine gerüstete Palette in annähernd vertikaler Lage im Horizontal-Bearbeitungszentrum festgespannt. Nach der Bearbeitung wird die Palette gelöst und mit Schwenkarmen in die waagrechte Position gebracht und auf der Auflage abgelegt. Abgelegte Paletten beanspruchen außerordentlich viel Platz, was bei konventionellen Palettenbahnhöfen einer Zelle für nebeneinander gelagerte Paletten, die zwischen Speicher-, Rüst- und Ladepositionen translatorisch verschoben werden, sehr großen Flächenbedarf bedingt. Um die benötigte Aufstellfläche deutlich zu verringern, sind in der Praxis Lösungen bekannt, bei denen zwei Paletten abwechselnd auf der Auflage abgelegt und wechselseitig dem Horizontal-Bearbeitungszentrum zugeführt werden. Um einen möglichst hohen Bearbeitungsdurchsatz in der Zelle zu ermöglichen, ist eine große Anzahl an Paletten erforderlich, die nicht nur viel Platz beanspruchen, sondern auch auf langen Wegen in und aus Lagerstellen bewegt werden müssen. Dies erhöht den Platzbedarf für die Zelle unzweckmäßig, und beeinflusst z. B. aufgrund langer Transportwege den Bearbeitungsdurchsatz und die Auslastung negativ.

Aus US 2018/0312349 A1 ist ein Bearbeitungszentrum mit einer Ladestation bekannt, in der ein Regal-Bediengerät mit Fahr- und Hebefunktionen Paletten handhabt und in den Geschossen des Palettenregals ablegt, beziehungsweise aus diesen entnimmt. Zum Wenden jeder Palette werden zwei Palettenträger-Systeme eingesetzt. Das Palettenregal hat nur einer Speicherfunktion für darin abgelegte Paletten.

Aus DE 10 2017 217 878 A1 ist eine Zelle aus mehreren verketteten Horizontal-Bearbeitungszentren bekannt, wobei jedes Bearbeitungszentrum zwei synchron schwenkbare Schwenkarme mit Palettenträgem zum Manipulieren von Paletten aufweisen. Zum Überführen jeder Palette ist ein parallel zur Frontseite des Bearbeitungszentrums verfahrbarer Transportwagen vorgesehen. Nicht benötigte Paletten werden in einem Palettenlager bereitgehalten.

Der Erfindung liegt die Aufgabe zugrunde, eine Zelle der eingangs genannten Art sowie ein Verfahren zu deren Betreiben hinsichtlich der Palettenmanipulation anzugeben, die sich trotz optimal großer Anzahl an Paletten durch reduzierten Platzbedarf, einem verzögerungsfreien Palettentransport und hohen Bearbeitungsdurchsatz mit optimaler Auslastung der Zelle auszeichnen.

Die gestellte Aufgabe wird mit den Merkmalen des Patentanspruchs 1 und verfahrensgemäß mit den Merkmalen des Patentanspruchs 9 gelöst.

Da jedem Horizontal-Bearbeitungszentrum der Zelle ein eigenes mehrgeschossiges Palettenregal in direkter Nachbarschaft zugeordnet ist, in welchem ein Geschoss auch eine Paletten-Durchlaufstrecke zu und von der Auflage vor dem Horizontal-Bearbeitungszentrum bildet, sowie ein quer zur Förderrichtung der Paletten zur und von der Auflage quer verfahrbares Regalbediengerät mit Hubfunktion, das zumindest zwischen den Palettenregalen der Horizontal-Bearbeitungszentren der Zelle verfahrbar ist, kann eine große Anzahl an Paletten direkt bereitgehalten und auf kürzestem Weg hin- und wegtransportiert werden, ohne Zeitverzug, und sogar in einer Anzahl, die größer ist als die von den Bearbeitungszentrum zur kontinuierlichen Bearbeitung benötigten Paletten. Dies ermöglicht hohen Bearbeitungsdurchsatz und eine optimale Auslastung der Zelle.

Bei dem Verfahren wird das jeweiligen Palettenregal nicht nur zum Speichern von z. B. bereits gerüsteten Paletten in direkter Nachbarschaft zum jeweiligen Horizontal-Bearbeitungszentrum verwendet, sondern auch zum An- und Abfördern jeweils einer Palette zu und von der Auflage des Horizontal-Bearbeitungszentrums, und zwar mit Unterstützung durch das Regalbediengerät, sodass jedes Horizontal-Bearbeitungszentrum bei überraschend geringem Platzbedarf ohne Zeitverzug die benötigten Paletten erhält und aus dem Horizontal-Bearbeitungszentrum entnommene Paletten auf dem gleichen Weg ohne Kollisionsgefahr mit anderen wegbeförderbar sind.

Zweckmäßig sind in der Zelle die Horizontal-Bearbeitungszentren zueinander parallel nur mit mindestens der Breite jedes Palettenregals beabstandet hintereinander angeordnet, und ist entlang der den Horizontal-Bearbeitungszentren abgewandten Außenseiten der Palettenregale eine Fahrgasse für das oder die Regalbediengeräte vorgesehen. Abgesehen von dem Zwischenabstand zwischen den Horizontal-Bearbeitungszentren, der zum Unterbringen des jeweiligen Palettenregals genutzt wird, lassen sich die Horizontal-Bearbeitungszentren in der Zelle sehr dicht aneinander platzieren, wodurch Wege zwischen den Palettenregalen und von diesen zu den Zentren optimal kurz sind, und der Platzbedarf der Zellen gering ist.

Bei zumindest einem Ende der Zelle ist neben einem Palettenregal ein vom Regelbediengerät anfahrbarer Rüsttisch vorgesehen. In diesem Fall erstreckt sich die Fahrgasse zumindest auch bis vor den Rüsttisch. Dabei kann, vorzugsweise, der Rüsttisch ein Rollentisch durch ein verstellbares Schleusentor von der Fahrgasse separiert sein. Die jeweilige Palette lässt sich mit geringem Kraftaufwand leicht auf den Rüsttisch schieben oder von diesem abnehmen, wobei das Schleusentor die Betriebssicherheit für beispielsweise am Rüsttisch arbeitendes Personal erhöht. Manipulationen am Rüsttisch werden beispielsweise mit Flurförderfahrzeugen ausgeführt, beispielsweise zum Beibringen einer leeren oder gerüsteten Palette oder zum Anliefern oder Abfördern von Werkstücken.

Zweckmäßig weist das Palettenregal mindestens drei Geschosse auf, von denen das unterste als Rollenbahn mit angetriebenen Rollen die Paletten-Durchlaufstrecke bildet. Auch die oberen Geschosse zum Zwischenlagern von Paletten können Rollenbahnen sein, gegebenenfalls mit angetriebenen Rollen, um die Paletten jeweils zügig bewegen zu können.

Zweckmäßig ist die Auflage vor jedem Horizontal-Bearbeitungszentrum ein Rollentisch, der auf gleicher Höhe liegen sollte wie die Paletten-Durchlaufstrecke im danebenstehenden Palettenregal. Der Rüsttisch neben dem Palettenregal ist gegebenenfalls niedriger als die Paletten-Durchlaufstrecke im Palettenregal, um dem Personal Arbeiten am Rüsttisch zu vereinfachen.

Falls nur ein Palettenregal bei jedem Horizontal-Bearbeitungszentrum vorgesehen ist, könnte dies zum Zwischenlagern weiterer Paletten auch mehr als drei Geschosse aufweisen, die von dem Regelbediengerät mit der Hubfunktion anfahrbar sind. Alternativ könnte in einer weiteren Ausführungsform bei jedem Horizontal-Bearbeitungszentrum dem Palettenregal in Förderrichtung gegenüberliegend an der anderen Seite des Horizontal-Bearbeitungszentrums ein weiteres mehrgeschossiges Palettenregal wiederum mit einer Paletten-Durchlaufstrecke vorgesehen sein, wobei dann, zweckmäßig, bei diesen weiteren Palettenregalen der Horizontal-Bearbeitungszentren der Zelle ein entlang der Zelle verlaufende Fahrgasse mit mindestens einem Regelbediengerät mit Hubfunktion angeordnet sein kann. Der Platzbedarf dieser Lösung ist nur unwesentlich größer, als bei nur einem Palettenregal pro Horizontal-Bearbeitungszentrum.

In einer zweckmäßigen Ausführungsform ist das zumindest mit Fahr- und Hubantrieben ausgestattete Regalbediengerät ein in einer Fahrgasse stehender, an Hubsäulen höhenverstellbarer Rollentisch. Das Regelbediengerät kann somit alle Palettenregale der Zelle bedienen und alle Geschosse der Palettenregale, aber auch den Rüsttisch.

Das Schleusentor kann höherverstellbar sein, wobei zweckmäßig an der dem Schleusentor abgewandten Seite des Rüsttisches eine mit einer Betätigung des Schleusentors verknüpfte Sperre, insbesondere eine Lichtschranke, vorgesehen ist. Wird der Rüsttisch beispielsweise mit Flurförderfahrzeugen durch die Sperre angefahren, und befindet sich Personal im Bereich des Rüsttisches, dann nimmt das Schleusentor seine Sperrstellung ein, dass erst dann geöffnet wird, wenn für Personal oder Flurförderfahrzeuge beim Rüsttisch keine Gefahr mehr vorliegt.

Verfahrensgemäß kann es schließlich zweckmäßig sein, wenn ein jeweiliges Werkstück durch ein Flurförderfahrzeug auf einer auf dem Rüsttisch platzierten leeren Palette positioniert oder von der Palette zwecks deren Leerung entfernt wird. Ist hingegen eine Palette mit einem teilbearbeiteten Werkstück vom Flurförderfahrzeug entlang der Fahrgasse zur weiteren Bearbeitung zu einem anderen Palettenregal eines weiteren Horizontal-Bearbeitungszentrums gebracht worden, wird entweder vom Regalbediengerät zu einem geeigneten Zeitpunkt eine leere Palette auf den Rüsttisch gebracht, oder eine leere Palette mit einem Flurförderfahrzeug bereitgestellt.

Anhand der Zeichnung wird eine Ausführungsform der Erfindung erläutert. Es zeigen:
- Fig. 1: eine Zelle mit sechs verketteten Horizontal-Bearbeitungszentren, in einer Perspektivansicht,
- Fig. 2: eine Perspektivansicht eines Eckbereiches der Zelle, in Fig. 1 rechts,
- Fig. 3: eine Ansicht ähnlich der von Fig. 2 beim Einbringen einer mit einem Werkstück bestückten Palette in ein Palettenregal,
- Fig. 4: eine Phase beim Entnehmen einer Palette aus dem Palettenregal,
- Fig. 5: das Überführen der entnommenen Palette zum Horizontal-Bearbeitungszentrum,
- Fig. 6: den Beginn einer Paletten-Wechseloperation im Horizontal-Bearbeitungszentrum,
- Fig. 7: eine weitere Phase beim Palettenwechsel,
- Fig. 8: eine weitere Phase beim Palettenwechsel,
- Fig. 9: eine weitere Phase beim Palettenwechsel,
- Fig. 10: eine weitere Phase beim Palettenwechsel,
- Fig. 11: die abschließende Phase eines Palettenwechsels,
- Fig. 12: die Entnahme der gewechselten Palette durch ein Regalbediengerät, und
- Fig. 13: die Überführung der gewechselten Palette mit dem bearbeiteten Werkstück zu einem Rüsttisch der Zelle.

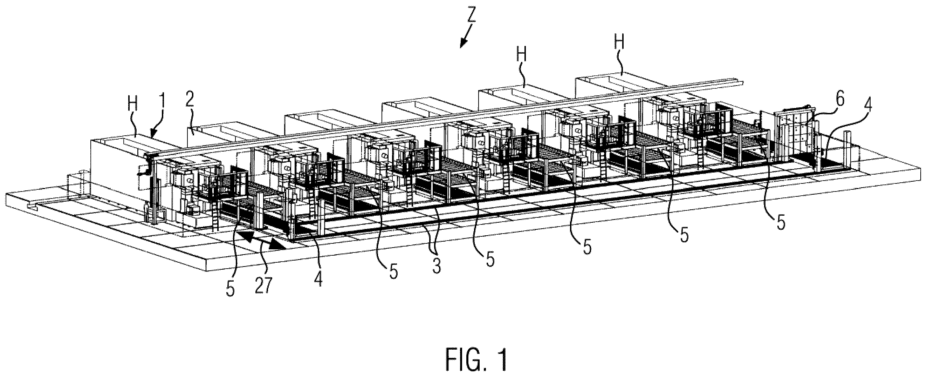

Fig. 1 ist eine Gesamtansicht einer Zelle Z aus sechs verketteten Horizontal-Bearbeitungszentren H, beispielsweise zur spanenden Bearbeitung von Flugzeugteile bildenden Werkstücken.

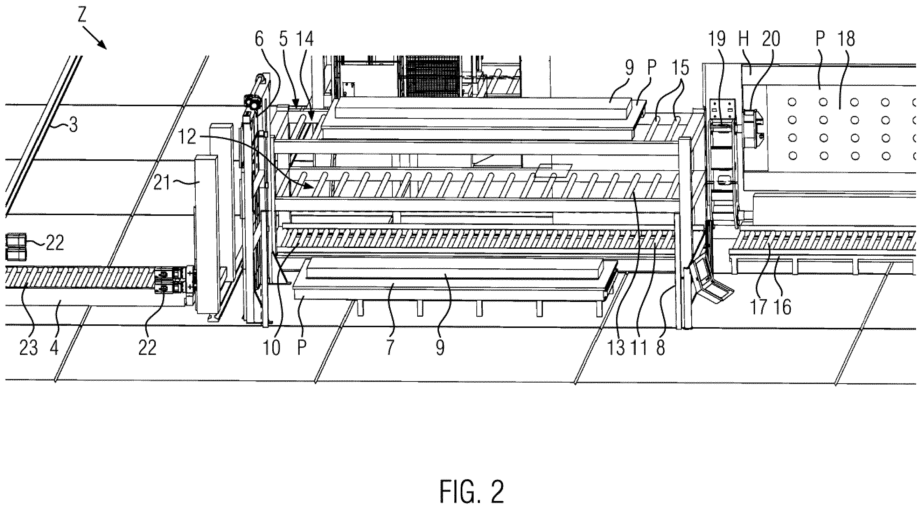

Die Fig. 2 bis 13 zeigen aufeinanderfolgende Betriebsphasen am nicht beschränkenden Beispiel des in Fig. 1 äußerst rechten Horizontal-Bearbeitungszentrums H. Wie in dieser Technik üblich, werden die häufig groß bemessenen Werkstücke auf Paletten fixiert und mit den Paletten in das jeweilige Horizontal-Bearbeitungszentrum zur Bearbeitung eingebracht. Diese Paletten können Abmessungen bis zu 4 m Breite und 20 m Länge haben. Das jeweilige Werkstück wird auf der Palette beim Manipulieren der Palette in dem Horizontal-Bearbeitungszentrum und während der Bearbeitung beispielsweise durch Unterdruckbeaufschlagung auf der Rüstseite der Palette fixiert.

Die Horizontal-Bearbeitungszentren H sind in einer ausgerichteten Reihe hintereinander in der gezeigten Ausführungsform der Zelle Z angeordnet, derart, dass eine jeweilige Front 1 zur Rückseite 2 des nächsten Horizontal-Bearbeitungszentrums weist, die zueinander parallel angeordnet sind, und mit Zwischenabständen, die nur geringfügig größer sind als die Breite jeweils mindestens eines jedem Horizontal-Bearbeitungszentrum H seitlich zugeordneten Palettenregals 5. Jedes Palettenregal erfüllt die Aufgabe eines Paletten-Pufferspeichers und einer Schleuse.

In der hier gezeigten Ausführungsform der Zelle Z ist bei jedem Horizontal-Bearbeitungszentrum nur ein Palettenregal 5 vorgesehen. Bei einer nicht gezeigten Alternative könnte an der gegenüberliegenden Seite jedes oder wenigstens eines Horizontal-Bearbeitungszentrums ein gleichartig ausgebildetes Palettenregal 5 platziert sein.

Entlang der Außenseiten der Palettenregale 5 in Fig. 1 verläuft parallel zur Reihe der Horizontal-Bearbeitungszentren H eine Fahrgasse 3, auf dem mindestens ein Regalbediengerät 4 verfahrbar ist, im gezeigten Ausführungsform in Fig. 1 sogar zwei Regalbediengeräte 4. Die Fahrgasse 3 ist am in Fig. 1 rechten Ende über das dortige Palettenregal 5 hinaus verlängert, bis mindestens zu einem Schleusentor 6 das vom Regalbediengerät 4 angefahren werden kann, und hinter welchem sich gemäß Fig. 2 ein Rüsttisch 7 befindet.

Ein Zweck der Verkettung ist es, die verketteten Horizontal-Bearbeitungszentren zur optimalen Auslastung bei möglichst geringem Platzbedarf universell und schnell mit Paletten und darauf angeordneten Werkstücken zu versorgen oder diese abzutransportieren. Ein weiterer Zweck der Verkettung besteht darin, Werkstücke in einem Horizontal-Bearbeitungszentrum H nur teilweise zu bearbeiten, und dann mit den Paletten zu weiteren Horizontal-Bearbeitungszentren zu transferieren, in welchen die Endbearbeitung oder ein weiterer Zwischenbearbeitungsschritt ausgeführt wird.

Fig. 2 zeigt das in Fig. 1 rechte Ende der Zelle Z beim Schleusentor 6, vor dem das Regalbediengerät 4 in der Fahrgasse 3 steht, und hinter welchem sich der Rüsttisch 7 befindet, der beispielsweise eingehaust und über eine Sperre 8, z.B. eine Lichtschranke, zugänglich ist. Auf dem Rüsttisch 7 ist eine Palette P abgelegt, auf welcher sich ein Werkstück 9, z. B. ein Rohling befindet.

Das dem Horizontal-Bearbeitungszentrum H zugeordnete Palettenregal 5 steht parallel zur Front 1 des Horizontal-Bearbeitungszentrums H und zu der mit einem Pfeil 27 in Fig. 1 angedeuteten Förderrichtung von Paletten und ist seitlich versetzt zur Front. Das Palettenregal 5 ist mehrgeschossig, d.h., es weist eine vom tiefsten Geschoss gebildete Paletten-Durchlaufstrecke 10, beispielsweise in Form einer Rollenbahn 11 mit zumindest einigen angetriebenen Rollen auf, sowie ein mittleres Geschoss 12 ebenfalls als Rollenbahn 13 und ein oberstes Geschoss 14 ebenfalls als Rollenbahn 15. Bei einer nicht gezeigten Alternative könnte das Palettenregal 5 auch noch wenigstens ein weiteres oberes Geschoss aufweisen. In Fig. 2 liegt auf dem obersten Geschoss 14 eine Palette P mit einem Werkstück 9, während das mittlere Geschoss 12 leer ist.

Direkt vor dem Horizontal-Bearbeitungszentrum H und parallel zu diesem steht eine tischförmige Auflage 16, zweckmäßig ausgebildet als Rollenbahn. In dem Horizontal-Bearbeitungszentrum H in Fig. 2 ist bereits eine Palette P in ihrer festgespannten Bearbeitungsposition in annähernd senkrechter Lage, derart, dass eine Rückseite 18 der Palette P nach außen weist, hingegen das nicht gezeigte Werkstück bearbeitet wird. Zum Manipulieren und Wechseln der Paletten P weist das Horizontal-Bearbeitungszentrum H zwei Schwenkarme 19 auf, an denen um etwa 180° drehbare Palettenträger 20 angeordnet sind, an und von denen die jeweilige Palette an- und abdockbar ist. Es können auch zwei Paletten P, dann Rücken an Rücken, angedockt sein und gehandhabt werden.

Das Regalbediengerät 4 ist ein in der Fahrgasse 3 fahrbarer Rollentisch mit hier vier Hubsäulen 21 zum Anheben des Rollentisches 23 auf die jeweils benötigte Höhe. Ferner sind Fahr- und Hubantriebe 22 am Regalbediengerät 4 vorgesehen.

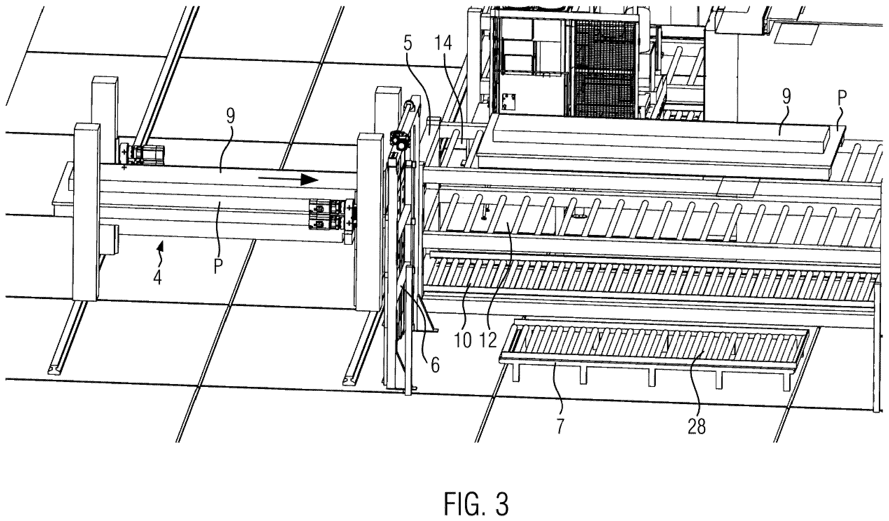

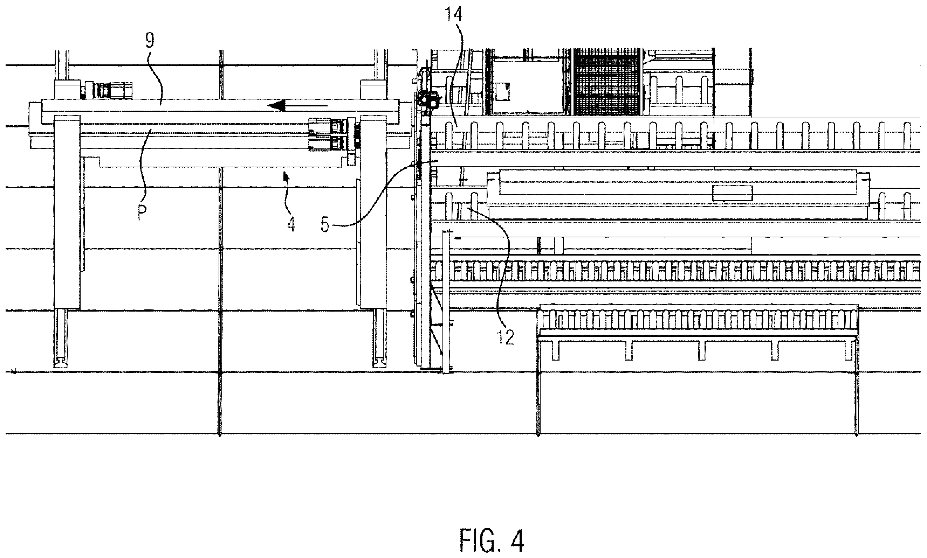

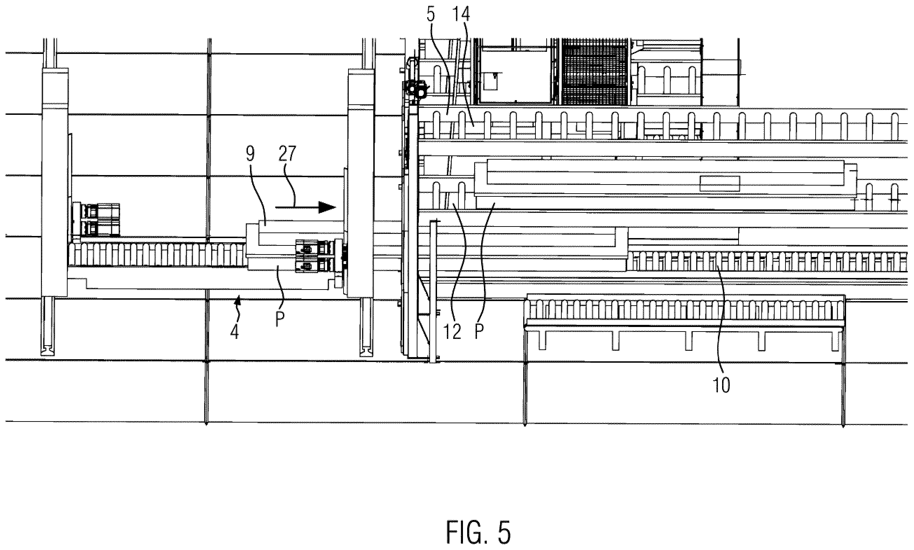

In Fig. 2 wurde beispielsweise die auf dem Rüsttisch 7 platzierte Palette P mit einem Flurförderfahrzeug (nicht gezeigt) mit dem Werkstück 9 gerüstet. Das Regalbediengerät 4 ist vor das Schleusentor 6 gefahren, das abgesenkt ist. Um die Palette P mit dem Werkstück 9 vom Rüsttisch 7 abzufördern, wird das Schleusentor 6 hochgefahren, und wird die Palette auf das Regalbediengerät 4 überführt, das dann in die Position von Fig. 3 vor das Palettenregal 5 fährt, und auf die Höhe des mittleren Geschosses 12 des Palettenregals 5 hochgestellt wird. Auf dem obersten Geschoss 14 befindet sich nach wie vor die Palette P mit dem Werkstück 9. In der Folge wird in Fig. 3 die Palette P mit dem Werkstück 9 vom Regalbediengerät 4 in das mittlere Geschoss 12 des Palettenregals 5 transferiert und dort gespeichert, ehe das Regal-bediengerät 4 auf die Höhe des obersten Geschosses 14 gestellt wird, und gemäß Fig. 4 die dort gespeicherte Palette P mit dem Werkstück 9 übernimmt. Das Regalbediengerät 4 wird dann auf das unterste Geschoss bzw. die Paletten-Durchlaufstrecke 10 abgesenkt, ehe gemäß Fig. 5 die Palette P mit dem Werkstück 9 in Förderrichtung 27 in die Durchlaufstrecke 10 überführt wird. Das oberste Geschoss 14 des Palettenregals 5 ist nun leer, während das mittlere Geschoss 12 die Palette P mit ihrem Werkstück zwischenlagert. Das Schleusentor 6 ist wieder in der in Fig. 2 gezeigten Sperrstellung. Der Rüsttisch 7 kann leer bleiben.

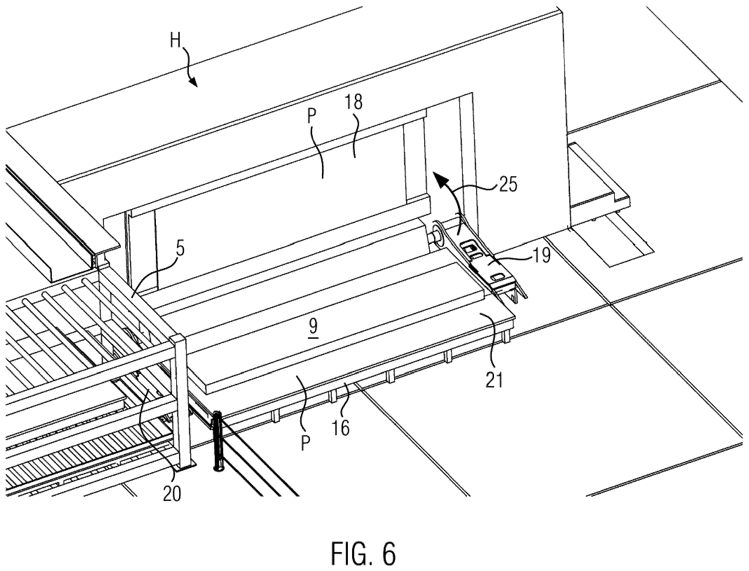

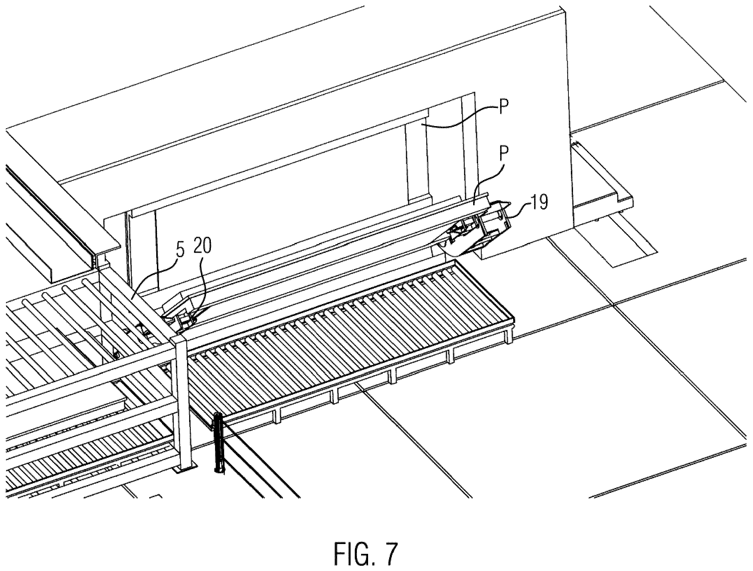

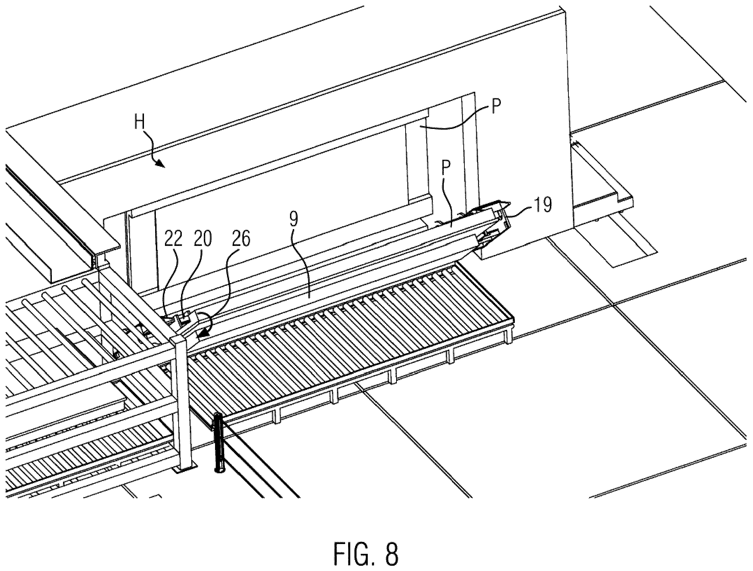

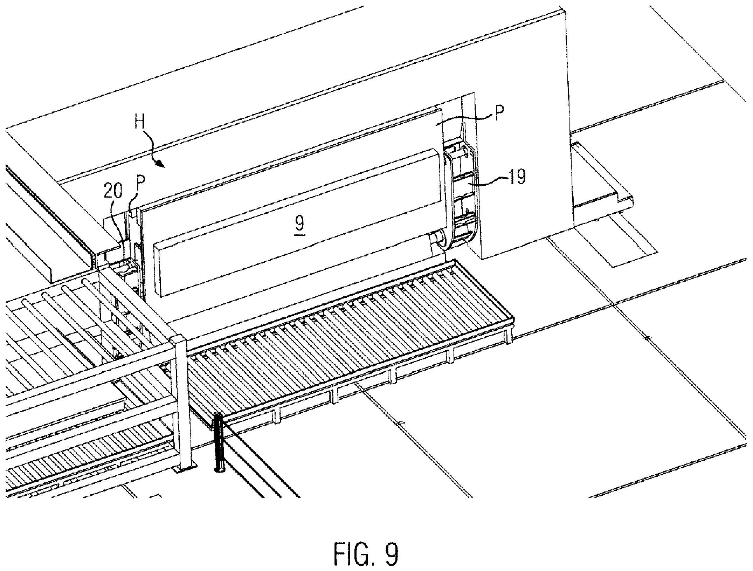

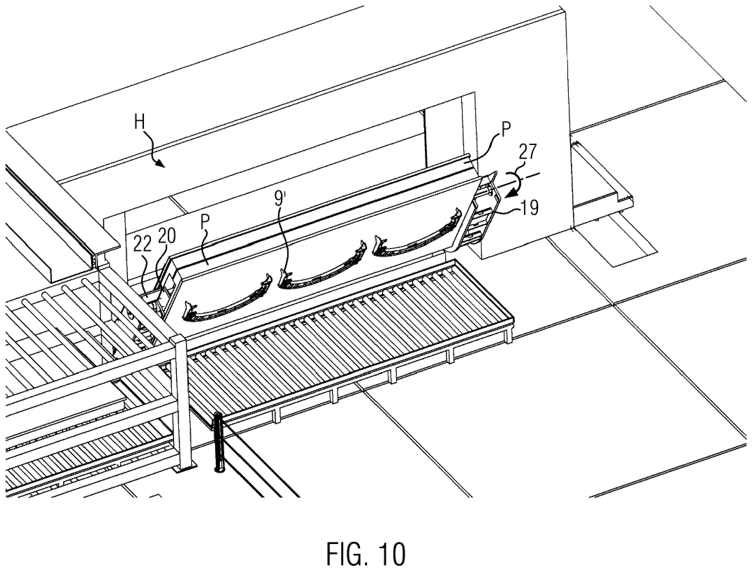

Gemäß Fig. 6 wird die Palette P mit dem Werkstück 9 nach Passieren der Paletten-Durchlaufstrecke 10 im Palettenregal 5 auf der Auflage 16 abgelegt, die z. B. die gleiche Höhe hat wie die Paletten-Durchlaufstrecke 10. Die beiden Schwenkarme 19 sind nun abgesenkt und die Palette P wird an den Palettenträgern 20 angedockt, und beispielsweise mit Unterdruck beaufschlagt, um das Werkstück 9 zu fixieren. Die andere Palette P, deren Rückseite 18 in Fig. 6 zu sehen ist, ist während der Bearbeitung nach wie vor in der Bearbeitungsposition im Horizontal-Bearbeitungszentrum H. Nun werden die Schwenkarme 19 in Richtung des Pfeils 25 bis auf etwa 45° hochgeschwenkt, und wird die angedockte Palette P gemäß Fig. 7 mittels der Palettenträger 20 um 180° aus der in Fig. 7 gezeigten Position in die in Fig. 8 gezeigte Position um eine von den Palettenträgern 20 an den Schwenkarmen 19 definierte Wendeachse 22 gewendet, angedeutet durch einen Pfeil 26, sodass das Werkstück 9 auf der Palette P vom Horizontal-Bearbeitungszentrum H nach außen weist. In der Folge und gemäß Fig. 9 wird die Palette P von den Schwenkarmen 19 mit ihrer Rückseite gegen die Rückseite 18 der im Horizontal-Bearbeitungszentrum befindlichen Palette P gebracht, wird die im Horizontal-Bearbeitungszentrum H in der Arbeitsposition festgespannte Palette gelöst und an die Palettenträger 20 angedockt, und werden gemäß Fig. 10 beide Paletten P gemeinsam von den Schwenkarmen 19 um etwa 45° abgesenkt und um die Wendeachse 22 in Richtung eines Pfeils 29 gewendet, sodass das fertig bearbeitete oder teilbearbeitete Werkstück 9' vom Horizontal-Bearbeitungszentrum nach außen und das unbearbeitete Werkstück auf der inneren Palette P nach innen weisen.

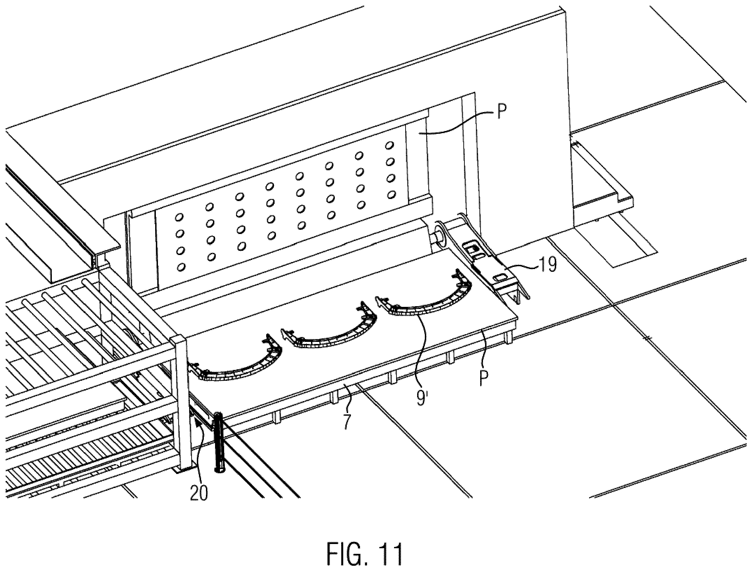

Zwischen der in Fig. 10 gezeigten Position und der in Fig. 11 gezeigten Position werden beide angedockten Paletten P von den beiderseits der Auflage 16 ausreichend nach unten geschwenkten Schwenkarmen 19 in das Horizontal-Bearbeitungszentrum H geschwenkt und wird die innere Palette P in der Bearbeitungsposition festgespannt und von den Palettenträgern 20 abgedockt, sodass in der Folge und gemäß Fig. 11 die einzelne Palette P mit dem bearbeiteten oder teilbearbeiteten Werkstück 9' nach oben weisend auf der Auflage 7 abgelegt und von den Palettenträgern 20 abgedockt wird, ehe die Schwenkarme 19 in eine Ruheposition nach oben geschwenkt werden.

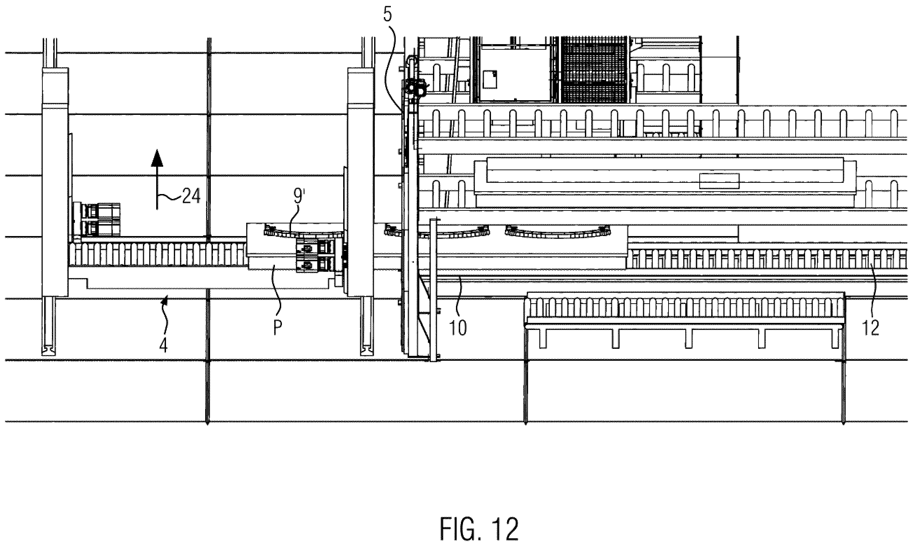

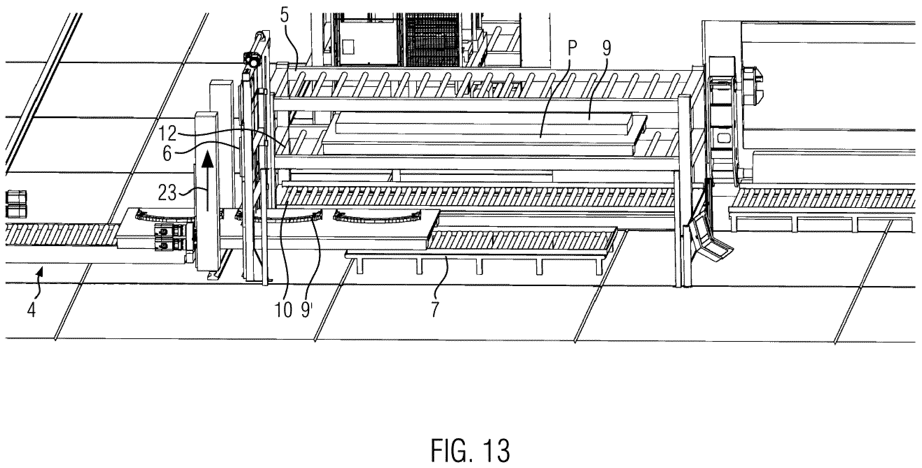

Gemäß Fig. 12 wird die Palette P mit dem Werkstück 9' durch die Paletten-Durchlaufstrecke 10 des Palettenregals 5 auf das bereitstehende und abgesenkte Regalbediengerät 4 überführt, und, falls erforderlich, von diesem in Richtung des Pfeils 24 zu einem anderen der verketteten Horizontal-Bearbeitungszentren H transferiert, um weiter oder fertig bearbeitet zu werden. Alternativ, und wie in Fig. 13 angedeutet, wird das Regalbediengerät 4 vor das Schleusentor 6 verfahren, wird das Schleusentor 6 geöffnet, und die Palette P mit dem Werkstück 9' auf den Rüsttisch 7 überführt. Der Rüsttisch 7 kann im Übrigen tiefer angeordnet sein als die Paletten-Durchlaufstrecke 10, um am Rüsttisch arbeitendem Personal die Arbeit zu erleichtern. Nachdem gemäß Fig. 13 die Palette P mit dem Werkstück 9' auf dem Rüsttisch 7 ordnungsgemäß positioniert ist, wird das Schleusentor 6 geschlossen, und wird das in diesem Fall fertig bearbeitete Werkstück 9' z. B. durch ein nicht gezeigtes Flurförderfahrzeug abgefördert, sodass die Palette P leer ist und bereitsteht für die Beladung mit einem neuen Werkstück, wie in Fig. 2 gezeigt. Für Wartungs- oder Sonderfälle kann jedes einzelne Horizontal-Bearbeitungszentrum H aus der Automation abgetrennt werden und separat mit Werkstücken und Paletten über Flurförderfahrzeuge oder Kräne bestückt werden.

Gemäß Fig. 4 wurde die Palette P mit dem Werkstück 9 vom obersten Geschoss 14 des Palettenregals 5 genommen, und das mittlere Geschoss 12 mit der vom Rüsttisch 7 beschafften Palette P beladen. Nach der Phase von Fig. 13 kann das Regalbediengerät 4 die Palette P mit einem neuen Werkstück 9 (z. B. Rohteil) auf das oberste Geschoss 14 des Palettenregals 5 laden, und die im mittleren Geschoss 12 gespeicherte Palette entnehmen und über die Paletten-Durchlaufstrecke 10 zum Horizontal-Bearbeitungszentrum H anfördern.

Bei einer anderen Verfahrensvariante zum Manipulieren von Paletten P könnte jeweils die vom Rüsttisch 7 mit einem Werkstück 9 beschaffte Palette vom Regalbediengerät 4 gleich direkt über die Paletten-Durchlaufstrecke 10 zum Horizontal-Bearbeitungszentrum H angefördert und nicht erst im Palettenregal 5 zwischengespeichert werden, jedoch unter der Voraussetzung, dass die Auflage 16 vor dem Horizontal-Bearbeitungszentrum bereits geleert wurde oder noch leer ist.

Das Konzept des Palettenregals 5 direkt zugeordnet einem Horizontal-Bearbeitungszentrum H und des Regalbediengeräts 4 zum Transferieren der Paletten P ist in einer Zelle Z verketteter Horizontal-Bearbeitungszentren H sehr zweckmäßig, aber auch für ein im Stand-Alone-Modus arbeitendes Horizontal-Bearbeitungszentrum H.

Falls Bedarf entsteht, vorübergehend noch eine weitere Palette P zu puffern, könnte hierfür auch das untere Geschoss oder die Durchlaufstrecke 10 im Palettenregal 10 benutzt werden, vorausgesetzt, die Auflage 16 ist leer oder kann auf anderem Weg geleert werden.

## Patentansprüche

1. Zelle (Z) mit mindestens zwei verketteten Horizontal-Bearbeitungszentren (H), insbesondere zur spanenden Bearbeitung von Flugzeugteilen, deren jedes an einer Frontseite (1) zwei Schwenkarme (19) mit um etwa 180° drehbaren Palettenträgern (20) zum Manipulieren und Wechseln von auf ihren Rüstseiten (21) Werkstücke (9, 9') tragenden Paletten (P) aufweist, die zu und von einer Auflage (16) vor dem Horizontal-Bearbeitungszentrum (H) an- und abförderbar sind, wobei jedem Horizontal-Bearbeitungszentrum der Zelle (Z) wenigstens ein gegenüber der Frontseite (1) in einer zur Frontseite (1) parallelen Förderrichtung (27) gegenüber der Auflage (16) versetztes, mehrgeschossiges Palettenregal (5) zugeordnet ist, in welchem ein Geschoss eine in Förderrichtung (27) verlaufende Paletten-Durchlaufstrecke (10) ist, und wobei wenigstens ein Regalbediengerät (4) mit Hubfunktion relativ zum Palettenregal (5) quer zur Förderrichtung (27) zumindest zwischen den Palettenregalen (5) der Horizontal-Bearbeitungszentren (H) der Zelle (Z) verfahrbar ist.

2. Zelle nach Anspruch 1, **dadurch gekennzeichnet, dass** in der Zelle (Z) die Horizontal-Bearbeitungszentren (H) zueinander parallel mit mindestens der Breite jedes Palettenregals (5) beabstandet hintereinander angeordnet sind, und dass entlang der den Horizontal-Bearbeitungszentren (H) abgewandten Außenseiten der Palettenregale (5) eine Fahrgasse (3) für das oder die Regalbediengeräte (4) vorgesehen ist.

3. Zelle nach Anspruch 2, **dadurch gekennzeichnet, dass**, vorzugsweise bei zumindest einem Ende der Zelle (Z), neben einem Palettenregal (5) ein vom Regalbediengerät (4) anfahrbarer Rüsttisch (7) für an- und abzufördernde Werkstücke (9, 9') vorgesehen ist, dass sich die Fahrgasse (3) zumindest bis vor den Rüsttisch (7) erstreckt, und dass, vorzugsweise, der Rüsttisch (7) ein Rollentisch (28) und von der Fahrgasse (3) durch ein verstellbares Schleusentor (6) separiert ist.

4. Zelle nach Anspruch 1, **dadurch gekennzeichnet, dass** das Palettenregal (5) mindestens drei Geschosse (10, 12, 14) aufweist, von denen das unterste als Rollenbahn (11) mit angetriebenen Rollen die Paletten-Durchlaufstrecke (10) bildet, und dass die oberen Geschosse (12, 14) Rollenbahnen (13, 15) sind, gegebenenfalls mit angetriebenen Rollen.

5. Zelle nach Anspruch 3, **dadurch gekennzeichnet, dass** die Auflage (16) vor jedem Horizontal-Bearbeitungszentrum ein Rollentisch (17) ist, und dass die Paletten-Durchlaufstrecke (10) im Palettenregal (5) und die Auflage (16) auf gleicher Höhe liegen, wobei, gegebenenfalls, ein neben dem Palettenregal (5) angeordneter Rüsttisch (7) tiefer liegt als die Paletten-Durchlaufstrecke (10) im Palettenregal (5).

6. Zelle nach Anspruch 1, **dadurch gekennzeichnet, dass** bei jedem Horizontal-Bearbeitungszentrum (H) dem Palettenregal (5) in Förderrichtung (27) gegenüberliegend an der anderen Seite des Horizontal-Bearbeitungszentrums (H) ein weiteres mehrgeschossiges Palettenregal (5) mit einer Paletten-Durchlaufstrecke (10) und bei diesen weiteren Palettenregalen (5) eine entlang der Reihe der Horizontal-Bearbeitungszentren (H) verlaufende Fahrgasse (3) mit wenigstens einem verfahrbaren Regalbediengerät (5) mit Hubfunktion angeordnet sind.

7. Zelle nach Anspruch 1, **dadurch gekennzeichnet, dass** das zumindest mit Fahr- und Hubantrieben (22) ausgestattete Regelbediengerät (4) ein auf Laufrädern stehender, an Hubsäulen (21) höhenverstellbarer Rollentisch (23) ist.

8. Zelle nach Anspruch 3, **dadurch gekennzeichnet, dass** das Schleusentor (6) höhenverstellbar ist, und dass an der dem Schleusentor (6) abgewandten Seite des Rüsttisches (7) eine mit einer Betätigung des Schleusentors (6) verknüpfte Sperre (8), insbesondere eine Lichtschranke, vorgesehen ist.

9. Verfahren zum Betreiben einer Zelle (Z) mit mindestens zwei verketteten Horizontal-Bearbeitungszentren (H), insbesondere zur spanenden Bearbeitung von Flugzeugteilen, deren jedes an einer Frontseite (1) zwei Schwenkarme (19) mit um etwa 180° drehbaren Palettenträgern (20) zum Manipulieren und Wechseln von auf ihren Rüstseiten (21) Werkstücke (9, 9') tragenden Paletten (P) aufweist, wobei eine auf eine Auflage (16) vor dem Horizontal-Bearbeitungszentrum (H) angeförderte Palette (P) mit wenigstens einem Werkstück (9) mit den Schwenkarmen (19) aufgenommen und in eine im Wesentlichen senkrechte, im Horizontal-Bearbeitungszentrum festgespannte Bearbeitungsposition überführt und das Werkstück bearbeitet wird, eine weitere Palette (P) mit darauf fixiertem Werkstück (9) auf die Auflage (16) gefördert, von den Schwenkarmen (19) aufgenommen, hochgeschwenkt, und mit den Palettenträgern (20) gewendet und mit ihrer Rückseite (18) gegen die Rückseite (18) der ersten Palette (P) bewegt wird, nach Bearbeitungsende beide Paletten (P) mit den Schwenkarmen (19) abgesenkt und um etwa 180° gewendet werden, die zweite Palette (P) mit den Schwenkarmen (19) in die im Horizontal-Bearbeitungszentrum (H) gespannte Bearbeitungsposition gebracht und das Werkstück (9) bearbeitet wird, die erste Palette (P) mit den Schwenkarmen abgesenkt und an diesen gewendet und mit ihrer Rüstseite (21) und dem bearbeiteten Werkstück (9') nach oben weisend auf der Auflage (16) abgelegt und abgefördert wird, wobei eine zur Auflage (16) angeförderte Palette (P) jeweils durch ein den Horizontal-Bearbeitungszentren (H) der Zelle (Z) entlang verfahrbares Regalbediengerät (4) mit Hubfunktion zuvor in wenigstens einem seitlich neben dem Horizontal-Bearbeitungszentrum (H) angeordneten, mehrgeschossigen Palettenregal (5) gespeichert wird, und zuvor die von der Auflage (16) über eine Palettendurchlaufstrecke (10) im Palettenregal (5) abgeförderte Palette (P) vom Regalbediengerät (4) aufgenommen und von diesem entweder zur Weiterbearbeitung des Werkstücks (9') an ein Palettenregal (5) eines weiteren Horizontal-Bearbeitungszentrums (H) oder zu mindestens einem Rüsttisch (7) transferiert wird.

## Claims

1. A cell (Z) comprising at least two interlinked horizontal machining centres (H), in particular for machining aircraft parts by material removal, each of which has, on a front side (1), two pivoting arms (19) with pallet carriers (20) rotatable through approximately 180° for handling and changing pallets (P) carrying workpieces (9, 9') on their setup sides (21), which pallets can be conveyed to and away from a support (16) in front of the horizontal machining centre (H), wherein each horizontal machining centre of the cell (Z) is assigned at least one multilevel pallet rack (5) arranged opposite the front side (1) and offset relative to the support (16) in a conveying direction (27) parallel to the front side (1), one level of which is a pallet pass-through section (10) extending in the conveying direction (27), and wherein at least one storage and retrieval machine (4) having a lifting function is movable relative to the pallet rack (5) transversely to the conveying direction (27) at least between the pallet racks (5) of the horizontal machining centres (H) of the cell (Z).

2. The cell according to claim 1, **characterised in that**, in the cell (Z), the horizontal machining centres (H) are arranged one behind another, parallel to one another and spaced apart by at least the width of each pallet rack (5), and **in that** a travel aisle (3) for the storage and retrieval machine or machines (4) is provided along the outer sides of the pallet racks (5) facing away from the horizontal machining centres (H).

3. The cell according to claim 2, **characterised in that**, preferably at at least one end of the cell (Z), a setup table (7) accessible by the storage and retrieval machine (4) for workpieces (9, 9') to be conveyed to and away from it is provided next to a pallet rack (5), **in that** the travel aisle (3) extends at least as far as the setup table (7), and **in that**, preferably, the setup table (7) is a roller table (28) and is separated from the travel aisle (3) by an adjustable access gate (6).

4. The cell according to claim 1, **characterised in that** the pallet rack (5) has at least three levels (10, 12, 14), of which the lowest forms the pallet pass-through section (10) as a roller conveyor (11) with driven rollers, and **in that** the upper levels (12, 14) are roller conveyors (13, 15), optionally with driven rollers.

5. The cell according to claim 3, **characterised in that** the support (16) in front of each horizontal machining centre is a roller table (17), and **in that** the pallet pass-through section (10) in the pallet rack (5) and the support (16) are at the same height, wherein, optionally, a setup table (7) arranged next to the pallet rack (5) is situated lower than the pallet pass-through section (10) in the pallet rack (5).

6. The cell according to claim 1, **characterised in that**, at each horizontal machining centre (H), a further multilevel pallet rack (5) having a pallet pass-through section (10) is arranged on the other side of the horizontal machining centre (H), opposite the pallet rack (5) in the conveying direction (27), and **in that**, alongside these further pallet racks (5), a travel aisle (3) extending along the row of horizontal machining centres (H) and having at least one movable storage and retrieval machine (5) with a lifting function are arranged.

7. The cell according to claim 1, **characterised in that** the storage and retrieval machine (4), which is equipped at least with travel and lifting drives (22), is a roller table (23) standing on running wheels and height-adjustable on lifting columns (21).

8. The cell according to claim 3, **characterised in that** the access gate (6) is height-adjustable, and **in that** a safety barrier (8) linked to an actuation of the access gate (6), in particular a photoelectric barrier, is provided on the side of the setup table (7) facing away from the access gate (6).

9. A method for operating a cell (Z) comprising at least two interlinked horizontal machining centres (H), in particular for machining aircraft parts by material removal, each of which has, on a front side (1), two pivoting arms (19) with pallet carriers (20) rotatable through approximately 180° for handling and changing pallets (P) carrying workpieces (9, 9') on their setup sides (21), wherein a pallet (P) conveyed onto a support (16) in front of the horizontal machining centre (H) and carrying at least one workpiece (9) is picked up by the pivoting arms (19) and transferred into a substantially vertical machining position in which it is clamped in the horizontal machining centre, and the workpiece is machined, a further pallet (P) with a workpiece (9) secured thereon is conveyed onto the support (16), picked up by the pivoting arms (19), pivoted upwards, and turned over by means of the pallet carriers (20) and moved with its rear side (18) against the rear side (18) of the first pallet (P), after completion of machining both pallets (P) are lowered by means of the pivoting arms (19) and turned through approximately 180°, the second pallet (P) is brought by means of the pivoting arms (19) into the machining position in which it is clamped in the horizontal machining centre (H), and the workpiece (9) is machined, the first pallet (P) is lowered by means of the pivoting arms and turned over on said arms and, with its setup side (21) and the machined workpiece (9') facing upwards, is placed on the support (16) and conveyed away, wherein a pallet (P) conveyed to the support (16) is in each case previously stored by a storage and retrieval machine (4) having a lifting function and movable along the horizontal machining centres (H) of the cell (Z) in at least one multilevel pallet rack (5) arranged laterally next to the horizontal machining centre (H), and beforehand the pallet (P) conveyed away from the support (16) via a pallet pass-through section (10) in the pallet rack (5) is picked up by the storage and retrieval machine (4) and transferred by the latter either to a pallet rack (5) of a further horizontal machining centre (H) for further machining of the workpiece (9') or to at least one setup table (7).

## Revendications

1. Cellule (Z) comprenant au moins deux centres d'usinage horizontaux (H) reliés entre eux, notamment pour l'usinage par enlèvement de matière de pièces d'aéronef, dont chacun présente, sur une face avant (1), deux bras pivotants (19) munis de supports de palette (20) pouvant tourner d'environ 180° pour la manipulation et le changement de palettes (P) portant, sur leurs faces de préparation (21), des pièces à usiner (9, 9'), lesquelles palettes peuvent être acheminées vers et évacuées d'un support (16) situé devant le centre d'usinage horizontal (H), dans laquelle au moins un rayonnage à palettes (5) à plusieurs niveaux, situé en face de la face avant (1) et décalé par rapport au support (16) suivant une direction de convoyage (27) parallèle à la face avant (1), est associé à chaque centre d'usinage horizontal de la cellule (Z), un niveau dudit rayonnage constituant une voie de passage des palettes (10) s'étendant suivant la direction de convoyage (27), et dans laquelle au moins un transstockeur (4) doté d'une fonction de levage est déplaçable par rapport au rayonnage à palettes (5) transversalement à la direction de convoyage (27), au moins entre les rayonnages à palettes (5) des centres d'usinage horizontaux (H) de la cellule (Z).

2. Cellule selon la revendication 1, **caractérisée en ce que**, dans la cellule (Z), les centres d'usinage horizontaux (H) sont disposés les uns derrière les autres, parallèlement les uns aux autres et espacés d'au moins la largeur de chaque rayonnage à palettes (5), et **en ce qu'**une allée de circulation (3) pour le ou les transstockeurs (4) est prévue le long des côtés extérieurs des rayonnages à palettes (5) opposés aux centres d'usinage horizontaux (H).

3. Cellule selon la revendication 2, **caractérisée en ce que**, de préférence à au moins une extrémité de la cellule (Z), une table de préparation (7), accessible par le transstockeur (4), pour des pièces à usiner (9, 9') à acheminer vers celle-ci et à évacuer de celle-ci est prévue à côté d'un rayonnage à palettes (5), **en ce que** l'allée de circulation (3) s'étend au moins jusqu'à la table de préparation (7), et **en ce que**, de préférence, la table de préparation (7) est une table à rouleaux (28) et est séparée de l'allée de circulation (3) par une porte de sas (6) réglable.

4. Cellule selon la revendication 1, **caractérisée en ce que** le rayonnage à palettes (5) présente au moins trois niveaux (10, 12, 14), dont le niveau inférieur forme la voie de passage des palettes (10) sous la forme d'un convoyeur à rouleaux (11) muni de rouleaux motorisés, et **en ce que** les niveaux supérieurs (12, 14) sont des convoyeurs à rouleaux (13, 15), le cas échéant munis de rouleaux motorisés.

5. Cellule selon la revendication 3, **caractérisée en ce que** le support (16) situé devant chaque centre d'usinage horizontal est une table à rouleaux (17), et **en ce que** la voie de passage des palettes (10) dans le rayonnage à palettes (5) et le support (16) se trouvent à la même hauteur, une table de préparation (7) disposée à côté du rayonnage à palettes (5) étant, le cas échéant, située plus bas que la voie de passage des palettes (10) dans le rayonnage à palettes (5).

6. Cellule selon la revendication 1, **caractérisée en ce que**, pour chaque centre d'usinage horizontal (H), un autre rayonnage à palettes (5) à plusieurs niveaux, muni d'une voie de passage des palettes (10), est disposé de l'autre côté du centre d'usinage horizontal (H), à l'opposé du rayonnage à palettes (5) dans la direction de convoyage (27), et **en ce qu'**une allée de circulation (3) s'étendant le long de la rangée des centres d'usinage horizontaux (H), avec au moins un transstockeur (5) déplaçable doté d'une fonction de levage, est disposée au niveau de ces autres rayonnages à palettes (5).

7. Cellule selon la revendication 1, **caractérisée en ce que** le transstockeur (4), équipé au moins d'entraînements de déplacement et de levage (22), est une table à rouleaux (23) reposant sur des roues de roulement et réglable en hauteur sur des colonnes de levage (21).

8. Cellule selon la revendication 3, **caractérisée en ce que** la porte de sas (6) est réglable en hauteur, et **en ce que**, sur le côté de la table de préparation (7) opposé à la porte de sas (6), est prévue une barrière de sécurité (8) liée à un actionnement de la porte de sas (6), notamment une barrière photoélectrique.

9. Procédé de fonctionnement d'une cellule (Z) comprenant au moins deux centres d'usinage horizontaux (H) reliés entre eux, notamment pour l'usinage par enlèvement de matière de pièces d'aéronef, dont chacun présente, sur une face avant (1), deux bras pivotants (19) munis de supports de palette (20) pouvant tourner d'environ 180° pour la manipulation et le changement de palettes (P) portant, sur leurs faces de préparation (21), des pièces à usiner (9, 9'), dans lequel une palette (P) acheminée sur un support (16) situé devant le centre d'usinage horizontal (H) et portant au moins une pièce à usiner (9) est prise en charge par les bras pivotants (19) et amenée dans une position d'usinage sensiblement verticale, dans laquelle elle est bridée dans le centre d'usinage horizontal, et la pièce à usiner est usinée, une autre palette (P) portant une pièce à usiner (9) fixée sur celle-ci est acheminée sur le support (16), prise en charge par les bras pivotants (19), relevée par pivotement, puis retournée au moyen des supports de palette (20) et déplacée de manière à amener sa face arrière (18) contre la face arrière (18) de la première palette (P), après la fin de l'usinage, les deux palettes (P) sont abaissées au moyen des bras pivotants (19) et retournées d'environ 180°, la deuxième palette (P) est amenée au moyen des bras pivotants (19) dans la position d'usinage dans laquelle elle est bridée dans le centre d'usinage horizontal (H), et la pièce à usiner (9) est usinée, la première palette (P) est abaissée au moyen des bras pivotants et retournée sur ceux-ci, puis déposée sur le support (16), sa face de préparation (21) et la pièce usinée (9') étant orientées vers le haut, et évacuée, une palette (P) acheminée vers le support (16) étant à chaque fois préalablement stockée, au moyen d'un transstockeur (4) doté d'une fonction de levage et déplaçable le long des centres d'usinage horizontaux (H) de la cellule (Z), dans au moins un rayonnage à palettes (5) à plusieurs niveaux disposé latéralement à côté du centre d'usinage horizontal (H), et, auparavant, la palette (P) évacuée du support (16) par une voie de passage des palettes (10) dans le rayonnage à palettes (5) étant prise en charge par le transstockeur (4) et transférée par celui-ci soit vers un rayonnage à palettes (5) d'un autre centre d'usinage horizontal (H) pour un usinage ultérieur de la pièce à usiner (9'), soit vers au moins une table de préparation (7).
